# EUROPEAN PATENT SPECIFICATION

(11) **EP 4 026 214 B1**
(45) Date of publication and mention of the grant of the patent: **01.07.2026**
(21) Application number: 20861084.0
(22) Date of filing: 03.09.2020
(51) Int. Cl.: B60L 3/04, H02H 3/087, H02H 7/00, H02H 7/18, H02H 9/00

(54) **A BATTERY JUNCTION BOX AND A BATTERY PACK FOR A VEHICLE**
BATTERIEANSCHLUSSDOSE UND BATTERIEPACK FÜR EIN FAHRZEUG
BOÎTE DE RACCORDEMENT DE BATTERIE ET BLOC-BATTERIE POUR VÉHICULE

(30) Priority: 05.09.2019 SE 1951010
(43) Date of publication of application: 13.07.2022
(73) Proprietor: Scania CV AB, 151 87 Södertälje (SE)
(72) Inventor: PAPADOPOULOS, Georgios, 58200 Edessa (GR); TENGSTEDT, Carl, 147 92 Grödinge (SE); GUSTAVSSON, Jens, 645 44 Strängnäs (SE); ROOS, Christer, 144 62 Rönninge (SE); NEE, Hans-Peter, 197 34 Bro (SE)
(74) Representative: Scania CV AB
(86) International application number: PCT/SE2020/050832
(87) International publication number: WO 2021/045668

(56) References cited:
- WO-A1-2017/196254
- CN-A- 102 097 796
- US-A1- 2003 183 838
- US-A1- 2003 183 838
- US-A1- 2007 121 257
- US-A1- 2015 109 707
- US-A1- 2018 062 384
- US-A1- 2019 206 638
- US-A1- 2019 206 639

## Description

### Technical field

The present invention relates to a battery junction box comprising a first input connected to a first output via a switch circuit, which switch circuit is configured to connect the first input to the first output upon receiving a control signal from a controller, the battery junction box further comprises a second input connected to a second output, via a fuse and a main switch arranged in series.

The invention also relates to a battery pack comprising such a battery junction box, and an electric vehicle provided with such a battery pack. The electric vehicle typically comprises an electric motor for the propulsion of the vehicle.

### Background

A battery junction box is used to control the connection between a battery pack and a DC link of an electric vehicle. This means that the battery junction box must be able to switch high voltage and high current. In conventional battery junction boxes at least two mechanical switches are used together with a fuse and a flywheel diode.

The DC link often exhibit both capacitance and inductance from the wiring harness of the vehicle. These reactive components often cause problems during switch-on and switch-off of the battery pack by means of the battery junction box. An inductive component may cause arcing in the mechanical switches during switch-off. A capacitive component may cause a large inrush of current during switch-on . A common solution to mitigate the effect of inductive components is to provide a flywheel diode.

The problem of large inrush current during switch-on is often mitigated by a controlled pre-charge of the capacitances in the wiring harness. This is handled by a pre-charge branch which employs a switch in series with a resistor, the resistor limits the inrush current during switch-on. This precharge branch is arranged in parallel with a main switch. The switch-on is performed by first activating the pre-charge branch and charge the capacitance through the resistor, followed by activation of the main switch.

The conventional battery junction box may also employ a current sensor in form of a shunt resistor with a voltmeter, either on the high side or on the low side. In order to provide increased safety of an electrical vehicle there is an interest in replacing the mechanical switches with electronic switches, with for example MOSFET devices. However, the switching of high voltage and high current is associated with a number of problems with conventional silicone-based MOSFET devices. But the availability of widebandgap devices such as MOSFET devices based on gallium nitride or silicon carbide provides new solutions.

However, the flywheel diode does usually not provide enough protection for overvoltage and arcing, and therefore other solutions are currently investigated.

US 2003/183838 A1 discloses a semiconductor circuit breaker in a DC power system having a switch circuit connected to a power line of a power supply. The system has a parallel branch of switching elements and a snubber circuit connected in parallel with the switching elements.

WO 2017/196254 A1 discloses a battery disconnection unit (BDU) connected in a DC power system. The BDU comprises a first switch circuit coupled to the positive power line and a second switch circuit coupled to the negative power line. The first switch circuit has a branch with semiconductor switches and a snubber circuit connected in parallel. The second circuit comprises a switch coupled in the negative power line.

US 2019/206639 A1 discloses a bidirectional power switch having a first switch circuit coupled to the positive power line and a second switch circuit coupled to the negative power line. The first switch circuit has a branch with semiconductor switches and a snubber circuit connected in parallel. The second circuit comprises a switch coupled in the negative power line.

CN 102097796 A discloses a disconnection unit (DU) in a photovoltaic system. The DU comprises a first switch circuit having semiconductor elements and snubber circuits connected in parallel. The DU further comprises a second switch. It is thus an object of the present invention to provide a battery junction box that enables switching of high voltages and high currents with an electronic switch.

A further object of the invention is to provide a battery junction box with a reduced number of components, that simultaneously allows charging of the battery pack through the battery junction box.

### Summary of the invention

The object of the invention is achieved by means of the initially defined in the appended independent claim 1 battery junction box, said battery junction box being characterized in that the switch circuit comprises at least a first branch with a semiconductor switch between the first input and the first output, which semiconductor switch has a control line connected to the controller, and the switch circuit further comprises a second branch with a snubber circuit, which second branch is parallell with the first branch between the first input and the first output, and a flywheel diode with a cathode connected to the first output, and an anode connected to the second output.

This provides an advantageous solution to the above problems and furthermore provides a battery junction box with increased safety and protection during high voltage and high current switching.

According to one embodiment, the snubber circuit of the second branch comprises a capacitor in series with a diode, and in that a resistor is arranged in paralell with the diode. This snubber circuit provides increased protection for the switch circuit.

According to one embodiment, the semiconductor switch is a transistor.

According to one embodiment, the transistor is made of a wide bandgap material. This allows switching with high electrical fields and high temperature.

According to one embodiment, the wide bandgap material is SiC (silicon carbide), or GaN (gallium nitride).

According to one embodiment, the transistor is a MOSFET (metaloxide semiconductor field effect transistor). This allows charging in the reverse direction of the transistor due to the body diode of the MOSFET that is forward biased in the reverse direction.

The object of the invention is also achieved by means of the battery pack with at least one battery module and characterized in that it comprises a battery junction box according to the present invention wherein the first input and the second input of the battery junction box is connected to the at least one battery module, and wherein the first output and the second output of the battery junction box is configured to be connected to the load.

Further features and advantages of the invention would be presented in the following detailed description of embodiments.

### List of Drawings

Fig. 1 is a schematic circuit drawing of a battery junction box according to an embodiment of the present invention,
Fig. 2 is a schematic block drawing of the battery pack according to an embodiment of the present invention, and
Fig. 3 is a schematic drawing of a vehicle with a battery pack according to an embodiment of the present invention.

### Detailed description

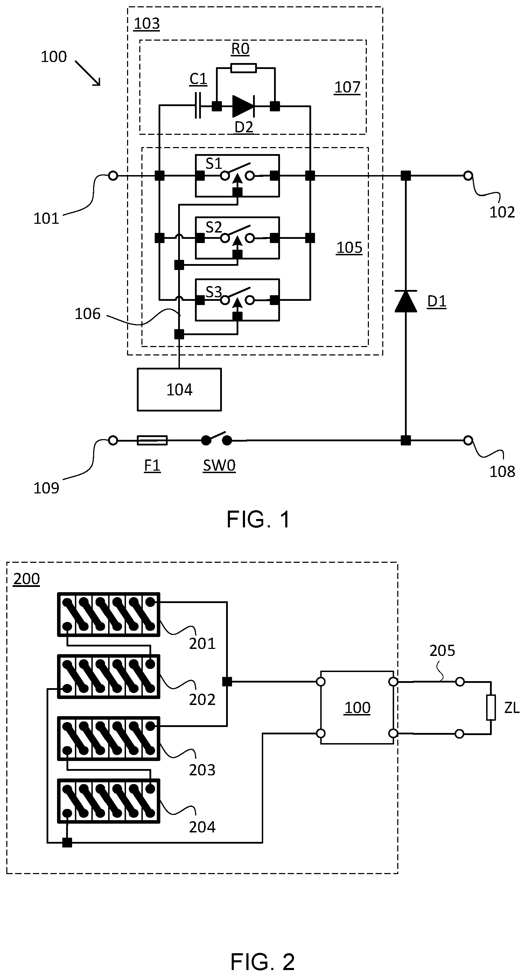

Fig. 1 shows a schematic circuit drawing of a battery junction box, generally designated 100, according to an embodiment of the present invention.

The battery junction box comprises a first input 101 connected to a first output 102 via a switch circuit 103. The switch circuit is configured to connect the first input to the first output upon receiving a control signal from a controller 104. The battery junction box further comprises a second input 109 connected to a second output 108, via a fuse (F1) and a main switch (SW0) arranged in series. The control signal may be an electric pulse or a voltage level that indicates the desired state of the switch circuit 103, for example 0 V for "OFF"-state and 5 V for "ON"-state.

The switch circuit 103 comprises at least a first branch 105 with a semiconductor switch S1-S3 between the first input and the first output, which semiconductor switch has a control line 106 connected to the controller.

The switch circuit further comprises a second branch 107 with a snubber circuit, which second branch is parallell with the first branch between the first input and the first output. A flywheel diode D1 with a first terminal connected to the first output, and a second terminal connected to the second output is also provided.

The snubber circuit of the second branch 107 comprises a capacitor C1 in series with a diode D2, and a resistor R0 is arranged in paralell with the diode D2. Other configurations of snubber circuits comprising these elements are of course possible.

The snubber circuit and the flywheel diode provides safety measures against overvoltages due to switching of inductive loads, which may cause severe overvoltages over the switch without these safety measures. These severe overvoltages may easily destroy the semiconductor switch.

The semiconductor switches of Fig. 1 are preferably transistors of MOSFET (metaloxide semiconductor field effect transistor) type. Since these transistors provide low switch losses and low resistance in the on-state they are preferred. Furthermore, if increasead maximum electrical field and increased temperature for operation are of interest MOSFET devices of wide bandgap materials such as SiC (silicon carbide), or GaN (gallium nitride) may be preferred.

Another beneficial feature of the battery junction box according to the present invention is that if a MOSFET is used for switches (S1-S3), charging in the reverse direction is possible due to the body diode in the MOSFET. However, in order to interrupt charging the main switch SW0 may be used, since the controller 104 is not controlling the MOSFET in the reverse direction. This means that the switches S1-S3 may be used for disconnection due to short-circuits on the output side of the battery junction box, and interrupt of charging may be performed by means of the main switch SW0.

Other types of transistors may also be employed such as for example IGBT devices, the selection of transistor type is to a large degree dependent on the voltage of the DC link as well as supplied current. By arranging semiconductor switches in parallel as showed in Fig. 1 the current drive performance may be scaled. Furthemore, each semiconductor switch may be provided a dedicated drive circuit as well as a snubber circuit.

Additionally, in Fig. 1 the controller 104 is shared by all switches S1-S3. However, each switch S1 to S3 may be provided with a dedicated controller 104 in other embodiments.

Now with reference made to Fig. 2 a battery pack, generally designated 200, is schematically illustrated. The battery pack is provided for supplying a load (ZL) with electric power via a so called DC link 205. The battery pack comprises at least one battery module 201-204), The battery pack comprises a battery junction box 100 according to the present invention, wherein the first input and the second input of the battery junction box is connected to the at least one battery module, and wherein the first output and the second output of the battery junction box is configured to be connected to the load (ZL). The load may comprise an inverter and an electrical motor connected to the DC link.

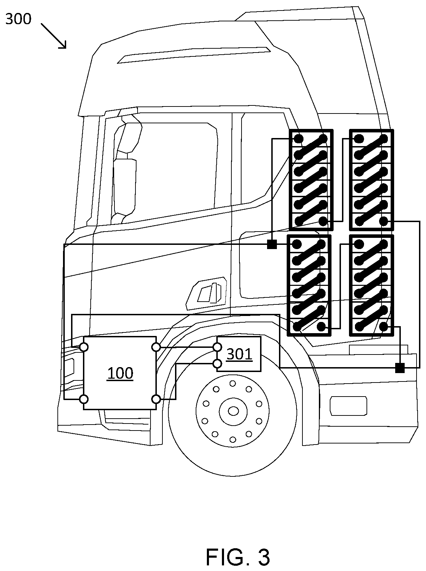

Fig. 3 shows schematically a vehicle, generally designated 300, The vehicle comprises a battery pack according to the present invention with a battery junction box 100 that is connected to an inverter 301 for supplying electric power to an electrical motor of the vehicle, which electrical motor and inverter constitutes the load. The electric motor may be provided for propulsion of the vehicle, and the inverter 301 is connected to the first output and the second output of the battery junction box of the battery pack. Furthermore, the vehicle may comprise a plurality of battery packs according to the present invention connected to the DC link of the vehicle, and each of the battery packs is provided a battery junction box according to the present invention. This allows remote control of connection of each battery pack to the DC link, which may be useful if for example one battery module is failing.

The battery junction box and the battery pack of the invention provides a number of advantageous features, for example by employing semiconductor switches a battery management system (BMS) may be configured to disconnect the batterys upon detection of anomalies. This solution provides addional safety to the battery pack of the vehicle, such as for example disconnection of the battery module to the DC link by means of the battery junction box upon collision detection.

## Claims

1. A battery junction box (100), comprising:
a first input (101) connected to a first output (102) via a switch circuit (103), which switch circuit is configured to connect the first input to the first output upon receiving a control signal from a controller (104);
a second input (109) connected to a second output (108), via a fuse (F1) and a main switch (SW0) arranged in series; and
wherein the battery junction box is **characterized in that**:
the switch circuit (103) comprises at least a first branch (105) with a semiconductor switch (S1-S3) between the first input and the first output, which semiconductor switch has a control line (106) connected to the controller; and
the switch circuit further comprises a second branch (107) with a snubber circuit, which second branch is parallel with the first branch between the first input and the first output; and
a flywheel diode (D1) with a cathode connected to the first output (102), and an anode connected to the second output (108).

2. A battery junction box (100) according to claim 1, **characterized in that** the snubber circuit of the second branch (107) comprises a capacitor (C1) in series with a diode (D2), and **in that** a resistor (R0) is arranged in parallel with the diode (D2).

3. A battery junction box according to claim 1 or 2, **characterized in that** the semiconductor switch is a transistor.

4. A battery junction box according to claim 3, **characterized in that** the transistor is made of a wide bandgap material.

5. A battery junction box according to claim 4, **characterized in that** the wide bandgap material is SiC (silicon carbide), or GaN (gallium nitride).

6. A battery junction box according to any of claims 3 to 5, **characterized in that** the transistor is a MOSFET metal oxide semiconductor field effect transistor).

7. A battery pack (200) for supplying a load (ZL) with electric power, wherein the battery pack comprises at least one battery module (201-204), the battery pack being **characterized in that** it comprises a battery junction box (100) according to any one of the preceding claims, wherein the first input and the second input of the battery junction box is connected to the at least one battery module, and wherein the first output and the second output of the battery junction box is configured to be connected to the load (ZL).

8. A vehicle comprising an electric motor, and a battery pack according to claim 7, wherein the load comprises the electric motor for propulsion of the vehicle, and the electric motor is connected to the first output and the second output of the battery junction box of the battery pack via an inverter (301).

## Patentansprüche

1. Batterieanschlussdose (100), die umfasst:
einen ersten Eingang (101), der über eine Schalterschaltung (103) mit einem ersten Ausgang (102) verbunden ist, wobei die Schalterschaltung dazu eingerichtet ist, den ersten Eingang mit dem ersten Ausgang zu verbinden, sobald sie ein Steuersignal von einem Steuergerät (104) empfängt;
einen zweiten Eingang (109), der über eine Sicherung (F1) und einen Hauptschalter (SW0), die in Reihe angeordnet sind, mit einem zweiten Ausgang (108) verbunden ist; und
wobei die Batterieanschlussdose **dadurch gekennzeichnet ist, dass**:
die Schalterschaltung (103) wenigstens einen ersten Zweig (105) mit einem Halbleiterschalter (S1-S3) zwischen dem ersten Eingang und dem ersten Ausgang umfasst, wobei der Halbleiterschalter eine mit dem Steuergerät verbundene Steuerleitung (106) aufweist; und
die Schalterschaltung ferner einen zweiten Zweig (107) mit einer Snubber-Schaltung umfasst, wobei der zweite Zweig parallel zum ersten Zweig zwischen dem ersten Eingang und dem ersten Ausgang verläuft; und
eine Freilaufdiode (D1), deren Kathode und Anode mit dem ersten Ausgang (102) bzw. mit dem zweiten Ausgang (108) verbunden sind.

2. Batterieanschlussdose (100) nach Anspruch 1, **dadurch gekennzeichnet, dass** die Snubber-Schaltung des zweiten Zweiges (107) einen Kondensator (C1) umfasst, der in Serie mit einer Diode (D2) geschaltet ist, und dass ein Widerstand (R0) parallel zur Diode (D2) angeordnet ist.

3. Batterieanschlussdose nach Anspruch 1 oder 2, **dadurch gekennzeichnet, dass** es sich bei dem Halbleiterschalter um einen Transistor handelt.

4. Batterieanschlussdose nach Anspruch 3, **dadurch gekennzeichnet, dass** der Transistor aus einem Material mit großer Bandlücke gefertigt ist.

5. Batterieanschlussdose nach Anspruch 4, **dadurch gekennzeichnet, dass** es sich bei dem Material mit großer Bandlücke um SiC (Siliziumkarbid) oder GaN (Galliumnitrid) handelt.

6. Batterieanschlussdose nach einem der Ansprüche 3 bis 5, **dadurch gekennzeichnet, dass** der Transistor ein MOSFET (Metall-Oxid-Halbleiter-Feldeffekttransistor) ist.

7. Batteriepack (200) zur Versorgung einer Last (ZL) mit elektrischer Energie, wobei der Batteriepack wenigstens ein Batteriemodul (201-204) umfasst, wobei der Batteriepack **dadurch gekennzeichnet ist, dass** er eine Batterieanschlussdose (100) nach einem der vorangehenden Ansprüche umfasst, wobei der erste Eingang und der zweite Eingang der Batterieanschlussdose mit dem wenigstens einen Batteriemodul verbunden sind und wobei der erste Ausgang und der zweite Ausgang der Batterieanschlussdose derart eingerichtet sind, dass sie mit der Last (ZL) verbunden werden können.

8. Fahrzeug mit einem Elektromotor und einem Batteriepack nach Anspruch 7, wobei die Last den Elektromotor für den Antrieb des Fahrzeugs umfasst und der Elektromotor über einen Wechselrichter (301) mit dem ersten Ausgang und dem zweiten Ausgang der Batterieanschlussdose des Batteriepacks verbunden ist.

## Revendications

1. Boîtier de jonction de batterie (100), comprenant :
une première entrée (101) connectée à une première sortie (102) par l'intermédiaire d'un circuit de commutation (103), lequel circuit de commutation est configuré pour connecter la première entrée à la première sortie lors de la réception d'un signal de commande provenant d'un dispositif de commande (104) ;
une deuxième entrée (109) connectée à une deuxième sortie (108), par l'intermédiaire d'un fusible (F1) et d'un commutateur principal (SW0) agencés en série ; et
dans lequel le boîtier de jonction de batterie est **caractérisé en ce que** :
le circuit de commutation (103) comprend au moins une première branche (105) avec un commutateur à semi-conducteur (S1-S3) entre la première entrée et la première sortie, lequel commutateur à semi-conducteur possède une ligne de commande (106) connectée au dispositif de commande ; et
le circuit de commutation comprend en outre une deuxième branche (107) avec un circuit d'amortissement, laquelle deuxième branche est parallèle à la première branche entre la première entrée et la première sortie ; et
une diode de roue libre (D1) avec une cathode connectée à la première sortie (102) et une anode connectée à la deuxième sortie (108).

2. Boîtier de jonction de batterie (100) selon la revendication 1, **caractérisé en ce que** le circuit d'amortissement de la deuxième branche (107) comprend un condensateur (C1) en série avec une diode (D2), et **en ce qu'**une résistance (R0) est agencée en parallèle avec la diode (D2).

3. Boîtier de jonction de batterie selon la revendication 1 ou 2, **caractérisé en ce que** le commutateur à semi-conducteur est un transistor.

4. Boîtier de jonction de batterie selon la revendication 3, **caractérisé en ce que** le transistor est constitué d'un matériau à large bande interdite.

5. Boîtier de jonction de batterie selon la revendication 4, **caractérisé en ce que** le matériau à large bande interdite est du SiC (carbure de silicium) ou du GaN (nitrure de gallium).

6. Boîtier de jonction de batterie selon l'une quelconque des revendications 3 à 5, **caractérisé en ce que** le transistor est un transistor à effet de champ métal-oxyde-semiconducteur (MOSFET).

7. Bloc-batterie (200) destiné à alimenter une charge (ZL) en énergie électrique, dans lequel le bloc-batterie comprend au moins un module de batterie (201-204), le bloc-batterie étant **caractérisé en ce qu'**il comprend un boîtier de jonction de batterie (100) selon l'une quelconque des revendications précédentes, dans lequel la première entrée et la deuxième entrée du boîtier de jonction de batterie sont connectées à l'au moins un module de batterie, et dans lequel la première sortie et la deuxième sortie du boîtier de jonction de batterie sont configurées pour être connectées à la charge (ZL).

8. Véhicule comprenant un moteur électrique, et un bloc-batterie selon la revendication 7, dans lequel la charge comprend le moteur électrique pour la propulsion du véhicule, et le moteur électrique est connecté à la première sortie et à la deuxième sortie du boîtier de jonction de batterie du bloc-batterie par l'intermédiaire d'un onduleur (301).
